(19) Europäisches Patentamt
European Patent Office
Office européen des brevets

(11) **EP 0 805 058 A1**

(12) **EUROPEAN PATENT APPLICATION**

(43) Date of publication:
05.11.1997 Bulletin 1997/45

(51) Int. Cl.$^6$: **B60J 10/08**, B60J 10/00

(21) Application number: 96303061.4

(22) Date of filing: 01.05.1996

(84) Designated Contracting States:
**DE ES FR GB IT**

(71) Applicant:
**DRAFTEX INDUSTRIES LIMITED**
**Edinburgh EH3 6YY, Scotland (GB)**

(72) Inventor: **Gallas, Gerard**
**44300 Nantes (FR)**

(74) Representative:
**Foster, David Martyn et al**
**MATHISEN MACARA & CO.**
**The Coach House**
**6-8 Swakeleys Road**
**Ickenham Uxbridge UB10 8BZ (GB)**

(54) **Sealing strips**

(57) A sealing strip for sealing between a flange (22,23) defining the door opening, such as in a motor vehicle body, and the door (24) of the opening, comprises a channel-shaped gripping part (12) for gripping the flange (22,23) and supporting a hollow tubular sealing part (14), preferably made of sponge rubber. The latter is partially compressed between the flange (22,23) and the closing door (24) so as to provide a barrier against ingress of moisture and draught. In order to provide improved blocking of acoustic energy, so as to reduce the amount of exterior noise (road noise, aerodynamic noise) transmitted into the interior of the the vehicle, the hollow tubular sealing part (14) has a partition wall (34) supporting a metal wire (30) running lengthwise along and within the hollow tube (14) and supported from the tubular side wall so as to be capable of vibrating in a transverse direction. The mass of the wire and the rigidity with which it is supported are such that the resonant frequency with which the wire (30) vibrates is less than a frequency band of acoustic energy to be attenuated, whereby the additional material tends to vibrate in opposition to, and thus attenuates, acoustic energy within that frequency band.

Fig.12.

## Description

The invention relates to a sealing strip for sealing around at least part of the frame of an opening closable by a closure member, comprising longitudinally extending compressible material positioned to be compressed between the frame and the closing closure member to provide a barrier seal, the compressible material carrying or including sound deadening material adapted to attenuate acoustic wave energy tending to pass between the frame and the closed closure member. The invention also relates to a sealing strip for sealing around at least part of a frame extending around an external opening of a motor vehicle closable by a closure member, comprising compressible material having a longitudinal extension corresponding to at least the said part of the frame and positioned to be compressed between the frame and the closing closure member to provide a sealing barrier therebetween, the compressible material carrying or including a portion of sound-deadening material adapted to attenuate acoustic energy tending to pass between the frame and the closed closure member.

Such strips are known from EP-A-0 613 800 for example. They are also known from "Ingenieurs de l'Automobile", vol. 1141, no. 680, April 1993, Courbevoie, France, pages 51-56, Planche-Mulocher, "Confort Acoustique...". However, such strips are not found to provide optimum attenuation of sound or acoustic energy. The invention aims to deal with this problem.

According to the invention, the known strip as first set forth above is characterised in that the sound deadening material includes metallic material providing an increase in the mass of the sound deadening material.

According to the invention, the known strip as secondly set forth above is characterised in that the sound-deadening portion supports a length of metal wire having a predetermined mass and extending along at least part of said longitudinal extension, the wire being supported with a predetermined degree of rigidity from the compressible material for mechanical vibration with the said portion in a direction transversely of the length of the wire in response to acoustic energy which arises externally of the vehicle, the predetermined mass of the metal wire and the predetermined rigidity with which it is supported providing a resonant frequency of vibration of the wire which is less than a frequency band of said acoustic energy, the wire thereby tending to vibrate in opposition to, and to attenuate, acoustic energy within that frequency band.

Sealing strips embodying the invention will now be described by way of example only, with reference to the accompanying drawings in which:

Figure 1 is a perspective view of a known form of sealing strip;

Figure 2 is a cross-section through the sealing strip of Figure 1, but showing it mounted on a bodywork flange surrounding a door opening in a vehicle body;

Figure 3 corresponds to Figure 2 but shows the configuration which the sealing strip adopts when the door closes in the opening;

Figure 4 is a cross-section corresponding to Figure 2 but showing a sealing strip embodying the invention;

Figure 5 corresponds to Figure 4 but shows the configuration which the sealing strip adopts when the door closes into the opening;

Figures 6 and 7 correspond respectively to Figures 4 and 5 but show a different form of sealing strip embodying the invention;

Figures 8 and 9 correspond to Figures 4 and 5 but show a further form of sealing strip embodying the invention;

Figures 10 and 11 correspond to Figures 4 and 5 but show yet a further form of sealing strip embodying the invention; and

Figure 12 corresponds to Figure 4 and shows a still further form of sealing strip embodying the invention.

In all the Figures, corresponding parts are indicated by the same reference numerals.

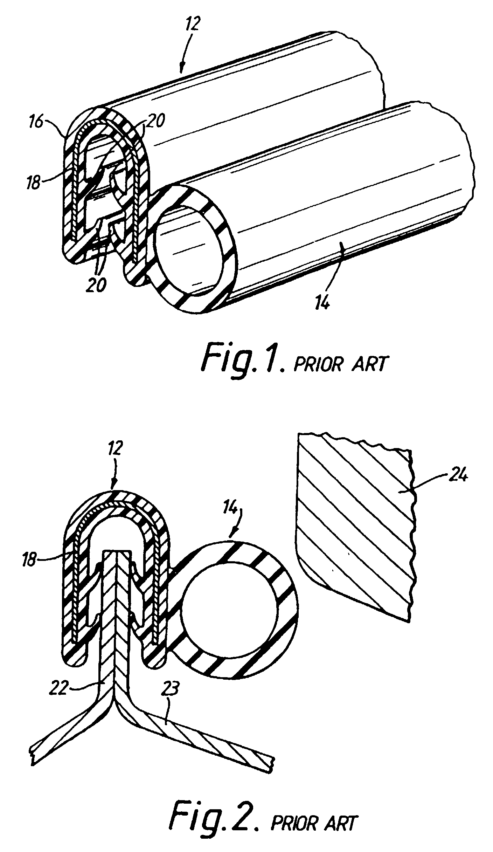

The sealing strip of Figures 1,2 and 3 comprises a longitudinally extending channel-shaped gripping part 12 on one outside wall of which is mounted a co-extending tubular sealing part 14. The gripping part 12 comprises extruded material, such as plastics or rubber material 16, in which is embedded a reinforcing core or carrier 18. The carrier 18 may take any suitable form. It may be made of metal which may be apertured at intervals along its length. In one form, the carrier comprises U-shaped elements arranged side by side along the length of the carrier to define a channel and either completely disconnected from each other or connected together by short integral connecting links. Instead, wire looped to and fro around the channel and along its length can be used. However, other forms of carrier construction are possible.

The gripping part 12 is preferably produced by a cross-head extrusion process.

The sealing part 14 is preferably made of soft rubber, such as sponge or cellular rubber. The sealing part 14 may again be made by an extrusion process. It may be made separately from the gripping part, and then adhesively attached to the gripping part in a separate operation. Instead, however, the whole sealing strip may be made by simultaneous extrusion.

The extruded material 16 of the gripping part 12 is preferably extruded with integral gripping lips 20 mounted on the inside facing walls of the channel. The extrusion process may be arranged so that the material of these gripping lips is softer than the remainder of the extruded material 18.

In use, the sealing strip is mounted around the frame of a door or other closable opening in a motor vehicle body by fitting the gripping part 12 onto the flange 22 (Figure 2) which extends around the opening and is formed where the inner and outer panels of the bodywork are brought together at the opening and welded. The configuration of the gripping part is such that it tightly grips the flange 22, this gripping action being assisted by the lips 20. In this way, therefore, the gripping part 12 supports the sealing part 14 so that the latter runs around the periphery of the opening and faces towards the door 24 or other closure member for the opening.

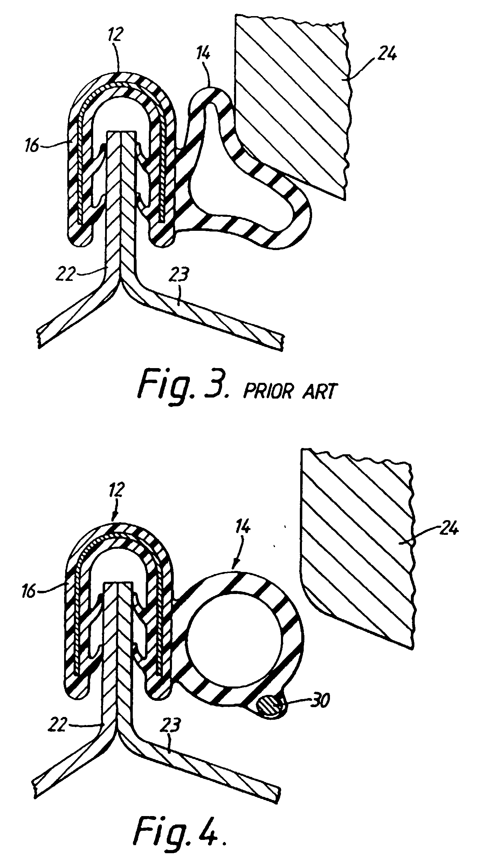

Figure 3 shows how the closing door 24 partially compresses the sealing part 14 to provide an effective seal around the opening against draught and water or moisture.

Figure 4 corresponds to Figure 2 but shows one of the sealing strips embodying the invention.

The normal material of the sealing part 14 (sponge or cellular rubber), although providing excellent sealing properties against ingress of draught, water or moisture, provides poor acoustic screening properties. Therefore, a sealing strip of the form shown in Figures 1 to 3 provides poor attenuation of external noise (such as road noise or aerodynamic noise), and thus provides low resistance to the transmission of such exterior noise into the interior of the vehicle. The sealing strip of Figure 4 is intended to mitigate this problem.

When an acoustic wave strikes the elastic material of the sealing part 14, part of the acoustic energy passes through the wall, another part is reflected and some is absorbed. The amount of energy passing through the wall and the amount reflected respectively depend on the acoustic impedance of the wall, that is, on its mass and rigidity. The greater the mass of the wall and its rigidity, the greater will be its acoustic impedance and, consequently, the lower will be the wave energy passing through the wall. In the case of the sealing strip shown in Figures 1 to 3, the material of the sealing part has a very low acoustic impedance and a significant part of the acoustic energy thus passes through the sealing part into the interior of the vehicle.

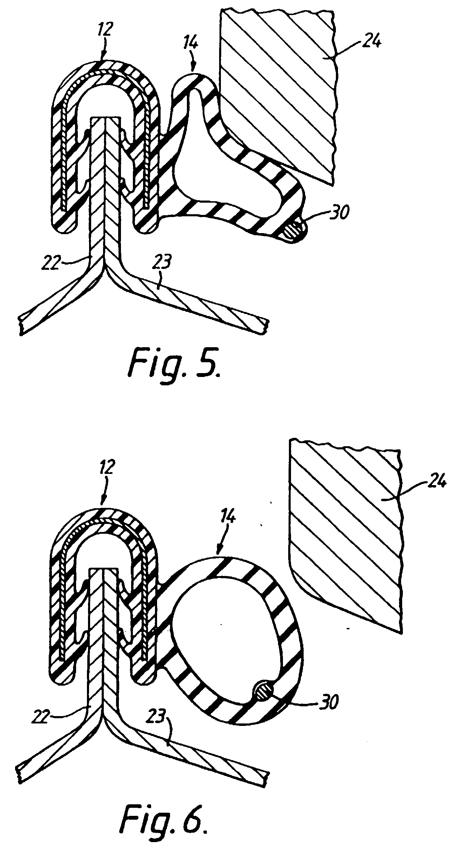

In the case of the sealing strip shown in Figures 4 and 5, however, the amount of acoustic energy passing through the sealing part 14 when the door is closed (Figure 5) is greatly reduced by the provision of an embedded metallic wire 30 which runs longitudinally along the length (or part of the length) of the strip, the wire being mounted on the outside of the sealing part 14 and covered by the material of the sealing part or other material. The metallic wire 30 increases the mass of the wall of the sealing part 14 and significantly reduces the transmission of acoustic energy into the vehicle. The wire 30 will tend to decrease the flexibility of the sealing part 14, thus tending to increase the effort required for closing the door. Therefore, the wire 30 is positioned on the sealing part 14 so as to minimise its effect on the latter's compressibility. As shown in Figure 5, it is positioned on the sealing part so that, when the door 24 is closed, the wire 30 is neither in contact with the door nor with the bodywork 23 adjacent the opening.

The wire 30 can be secured to the material of the sealing part 14 by adhesive and preferably covered with rubber or similar material. Advantageously, though, it is inserted by co-extrusion with the remainder of the material of the sealing part.

In the sealing strip of Figures 4 and 5, the wire 30 is positioned on the outside of the sealing part 14.

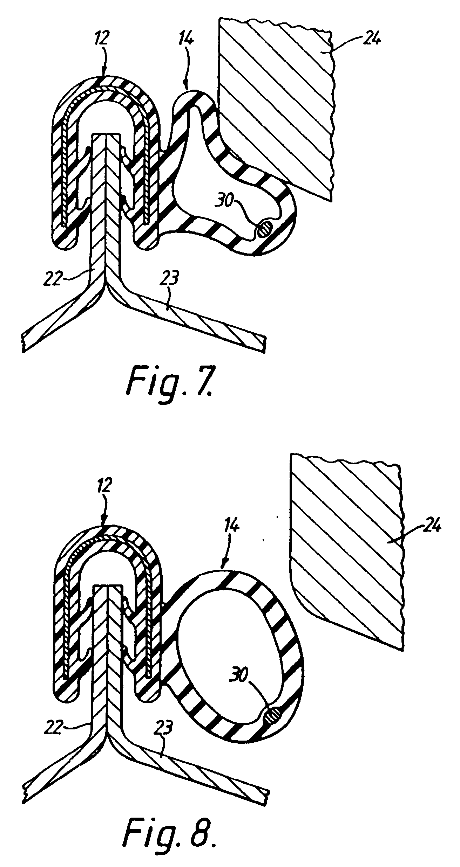

Figures 6 and 7 correspond to Figures 4 and 5 but show an arrangement in which the wire 30 is provided on the inside of the wall of the hollow sealing part 14 instead of on the outside. The construction and operation is otherwise the same. In this case, the wire 30 is inserted by co-extrusion with the remainder of the sealing part 14.

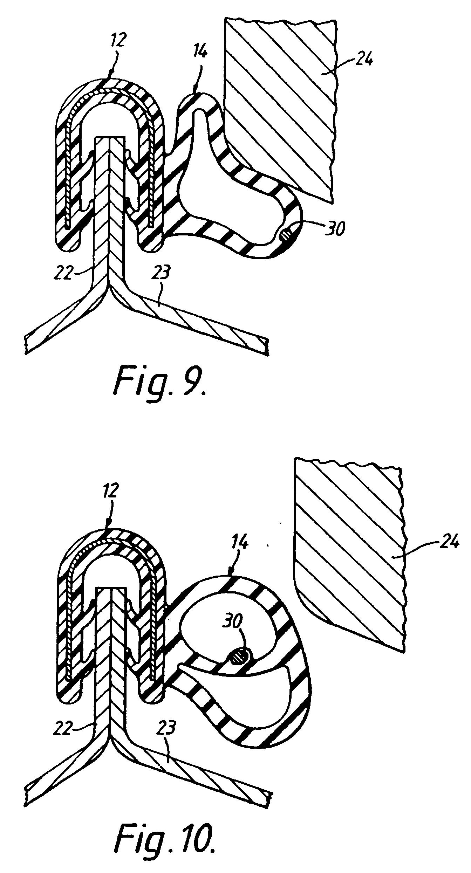

Figures 8 and 9 show a modification in which the wire 30 is embedded in the wall itself of the sealing part.

Although Figures 4 to 9 show the use of a sealing part 14 of hollow configuration, the sealing part may in certain circumstances take the form of a lip. In such a case, the wire 30 may be provided in the same way as described.

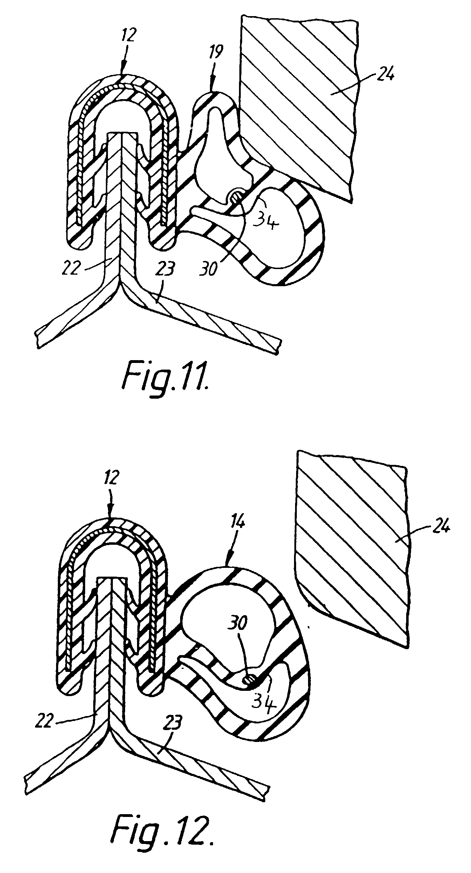

Figures 10 and 11 show another form in which the sealing part 14 is provided with a dividing wall 34. The wire 30 is mounted (preferably by co-extrusion) on one side of this dividing wall. The construction and operation is otherwise the same as for the other examples shown in Figures 4 to 9.

The sealing strip shown in Figure 12 is similar to that shown in Figures 10 and 11, except that the wire 30 is embedded in the dividing wall 34 itself.

Preferably, the mass of the wire 30 is selected to maximise the acoustic screening effect.

This if $m$ is the mass of the acoustic screen 30 and $k$ is the rigidity of the wall in or on which it is mounted, the assembly comprising the wire 30 and the wall will have a resonant frequency $f$, where

$$f = \frac{1}{2\pi} \cdot \sqrt{(k/m)}$$

Therefore, incident acoustic wave energy at the frequency $f$ will cause the wire 30 and its supporting wall to resonate at this frequency. However, incident acoustic wave energy at frequencies above $f$ will cause the wire and the wall to vibrate in opposition to the incident energy. The acoustic impedance and thus the acoustic screening effect will be increased or reinforced. The amount of acoustic energy reflected by the wire 30 will be increased by the resultant vibration of the mass $m$.

Therefore, by selecting the mass $m$ and the rigidity $k$ in dependence on the primary frequency band of the acoustic energy to be attenuated, the attenuation effect can be considerably increased. The resonant frequency should be low relative to the passband of the human ear (which is from about 20 Hz to about 20 kHz). A value for the resonant frequency of about 30 to 50 Hz may be used, for example.

It is necessary, though, to ensure that the mass $m$ is not increased to such an extent that the resultant volume of the wire 30 causes the latter to come into contact with the internal wall of the sealing part 14 at maximum deformation. The optimum geometry for the wire 30 can be obtained by computer-aided design.

It is found to be particularly advantageous to implement the acoustic screen by the length of metal wire 30 in the manner illustrated. Metal wire can easily be selected so as to have the necessary mass for providing adequate damping in accordance with the equation described above. The wire can be incorporated into the sealing part 14 using a known cross-head extrusion process for example.

Because of the relatively great mass of metal wire per unit length, the metal wire can be of relatively small diameter, and the problem that, at maximum deformation of vibration, it may come into contact with the internal wall of the sealing part 14 is not likely to arise.

In the embodiments described with reference to Figures 3 to 12, the wire 30 is shown embedded in or on the compressible material of the sealing part 14. Instead, however, the material in or on which the wire 30 is embedded may be material selected to have good sound deadening properties and, for example, co-extruded with the compressible material.

## Claims

1. A sealing strip for sealing around at least part of the frame (22,23) of an opening closable by a closure member (24), comprising longitudinally extending compressible material (14) positioned to be compressed between the frame (22,23) and the closing closure member (24) to provide a barrier seal, the compressible material (14) carrying or including sound deadening material (30) adapted to attenuate acoustic wave energy tending to pass between the frame (22,23) and the closed closure member (24), characterised in that the sound deadening material includes metallic material (30) providing an increase in the mass of the sound deadening material.

2. A sealing strip according to claim 1, characterised in that the metallic material (30) is positioned so as to minimise its effect on the compressibility of the compressible material.

3. A strip according to claim 1 or 2, characterised in that the compressible material is in the form of a hollow tube (14) which is partially collapsed by compression by the closing closure member (24), and the metallic material (30) is mounted on a part of a wall of the tube (14) which constitutes the sound deadening material and which is substantially clear of both the closing closure member (24) and the frame.

4. A strip according to claim 3, characterised in that the metallic material (30) is positioned on the outside of the said part of the wall of the tube (14).

5. A strip according to claim 3, characterised in that the metallic material (30) is positioned on the inside of the said part of the wall of the tube (14).

6. A strip according to claim 3, characterised in that the metallic material (30) is positioned in the said part of the wall of the tube (14).

7. A strip according to claim 1 or 2, characterised in that the compressible material is in the form of a hollow tube (14) which is positioned to be partially collapsed by the closing closure member (24), the tube having an internal partition wall (34) including the sound deadening material and the metallic material (30).

8. A strip according to any preceding claim, characterised in that the metallic material (30) is mounted by co-extrusion.

9. A strip according to any preceding claim, characterised in that the mass of the metallic material (30) and the density of the sound deadening material are so selected in relation to the frequency of the acoustic wave energy to be attenuated as to provide dynamic attenuation of the acoustic energy.

10. A strip according to claim 9, characterised in that the mass of the metallic material and the rigidity with which it is supported provide a resonant frequency of vibration of the sound deadening material and the metallic material which is less than a frequency band of said acoustic energy.

11. A strip according to any preceding claim, characterised in that it is mounted on a channel-shaped gripping part (12) adapted to engage the frame (22,23).

12. A strip according to any preceding claim, characterised in that the compressible material is soft rubber.

13. A strip according to any preceding claim, characterised in that the metallic material is a length of metal wire (30) extending continuously along at least part of the longitudinal extension of the strip.

14. A sealing strip for sealing around at least part of a frame (22,23) extending around an external opening of a motor vehicle closable by a closure member (24), comprising compressible material (14) having a longitudinal extension corresponding to at least the said part of the frame (22,23) and positioned to be compressed between the frame (22,23) and the closing closure member (24) to provide a sealing barrier therebetween, the compressible material carrying or including a portion of sound-deadening material adapted to attenuate acoustic energy tending to pass between the frame (22,23) and the closed closure member (24), characterised in that the sound-deadening portion supports a length of metal wire (30) having a predetermined mass and extending along at least part of said longitudinal extension, the wire (30) being supported with a predetermined degree of rigidity from the compressible material (14) for mechanical vibration with the said portion in a direction transversely of the length of the wire (30) in response to acoustic energy which arises externally of the vehicle, the predetermined mass of the metal wire (30) and the predetermined rigidity with which it is supported providing a resonant frequency of vibration of the wire (30) which is less than a frequency band of said acoustic energy, the wire thereby tending to vibrate in opposition to, and to attenuate, acoustic energy within that frequency band.

15. A strip according to claim 14, characterised in that the compressible material is in the form of a tubular wall defining a hollow tube (14), the tube (14) carrying the said portion, the cross-sectional size of the wire (30) and the predetermined rigidity with which it is supported being selected whereby the wire (30) when vibrating does not contact the tubular wall of the hollow tube (14) when the latter is compressed by the closing closure member (24).

16. A strip according to claim 14 or 15, characterised in that the sound-deadening portion is part of the compressible material (14).

17. A strip according to claim 16, characterised in that the wire (30) is at least partly embedded in the compressible material.

18. A strip according to claim 15, characterised in that the compressible material defines a partition wall (34) extending along at least part of the longitudinal extension of the tube (14) and also extending across the hollow interior of the tube (14), the wire (30) partition wall (34) constituting the said portion of sound-deadening material, being supported on the partition wall (34).

19. A strip according to any one of claims 14 to 18, characterised in that it is mounted on a channel-shaped gripping part (12) which is adapted to engage the frame (22,23).

20. A strip according to any one of claims 14 to 19, characterised in that the compressible material and the sound deadening material are soft rubber.

Fig.1. PRIOR ART

Fig.2. PRIOR ART

EP 0 805 058 A1

Fig. 3. PRIOR ART

Fig. 4.

7

Fig. 5.

Fig. 6.

Fig. 7.

Fig. 8.

Fig. 9.

Fig. 10.

Fig.11.

Fig.12.

**European Patent Office**

**EUROPEAN SEARCH REPORT**

Application Number

EP 96 30 3061

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | EP-A-0 644 350 (DAIMLER-BENZ AEROSPACE) * the whole document * --- | 1,14 | B60J10/08 B60J10/00 |
| Y | US-A-5 050 349 (YOSHINORI GOTO) * the whole document * --- | 1,14 | |
| A,D | EP-A-0 613 800 (DRAFTEX) * the whole document * --- | 1,14 | |
| A | PATENT ABSTRACTS OF JAPAN vol. 8, no. 143 (M-306) [1580] , 4 July 1984 & JP-A-59 040937 (KINUGAWA GOMU), 6 March 1984, * abstract * ----- | 1 | |

TECHNICAL FIELDS SEARCHED (Int.Cl.6)

B60J

The present search report has been drawn up for all claims

| Place of search | Date of completion of the search | Examiner |
|---|---|---|
| THE HAGUE | 2 October 1996 | Kusardy, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)